# EUROPEAN PATENT APPLICATION

(11) **EP 3 539 656 A1**
(43) Date of publication of application: **18.09.2019**
(21) Application number: 16921311.3
(22) Date of filing: 24.11.2016
(51) Int. Cl.: B01J 35/00, B01J 23/42, B01J 23/44, B01J 23/46, B01J 23/50, B01J 23/52, B01J 31/06, B01J 31/28

(54) **MATERIAL COMPRISING PRECIOUS METAL ISOLATED ATOMS STABLE IN SOLUTION**

(30) Priority: 11.11.2016 CN 201611004958
(71) Applicant: Dalian Institute of Chemical Physics, Chinese Academy of Sciences, Dalian, Liaoning 116023 (CN)
(72) Inventor: ZHANG, Zongchao, Dalian Liaoning 116023 (CN); LIU, Kairui, Dalian Liaoning 116023 (CN); MAO, Jingbo, Dalian Liaoning 116622 (CN)
(74) Representative: Casalonga
(86) International application number: PCT/CN2016/000652
(87) International publication number: WO 2018/085958

(57) **Abstract**

This invention provides isolated noble metal atoms stabilized in a solution and a method in synthesizing such materials. A block copolymer containing siloxane groups and polyether groups is used as a protective agent to stabilize the reduced isolated noble metal atoms. An aqueous solution containing reducing agents is used as a solvent in the preparation of the material. The weight ratio of precious metal to the protective agent is arbitrary. The invention uses special protective agents to avoid the aggregation of primary isolated atoms to nanoparticles in the synthesis process. The reduced atomic material is distinguished from the known metal nanoparticles and can be used in energy materials, pharmaceutical synthesis, medical materials, catalyst preparation etc. The atomic material provides the building block for the synthesis of number-controlled metal clusters or nanomaterials with the same or different metals.

## Description

### BACKGROUND OF THE INVENTION

### FIELD OF THE INVENTION

The invention relates to the field of new materials invention, and the specific material is an isolated noble metal atoms material which is stable in solution.

### DESCRIPTION OF RELATED ARTS

Precious metals and their alloys have been widely used in modern industry due to their excellent properties. Due to its high temperature corrosion resistance, high reliability, high precision and long service life, precious metals are widely used in aerospace, marine industry and military precision instruments, such as spring sheets, bellows, conductive hairsprings, shafts sharp and other originals. At the same time, precious metals are widely used in the preparation of medical materials due to their physiological non-toxicity, good ductility and biocompatibility. For example, amalgam alloys and casting alloys which are two major precious metal alloys used in the dental field, medical gold needles, silver needles and hard needles, medical electronic equipment and electrode materials. Furthermore, precious metals possess unique catalytic properties and stability, especially platinum group metals (ruthenium, osmium, palladium and platinum), which are widely used in petrochemical, hydrogen fuel cells and other fields. However, the scarcity of precious metal resources and the backwardness of manufacturing technology lead to the high price of precious metals, which seriously restricts their use in various fields.

The isolated noble metal atoms in a solution provide a versatile stock source for the efficient use of precious metals. Maria Flytzani-Stephanopoulos et al. (Acc. Chem. Res, 2014, 47, 783.) reported the synthesis of Au monoatomic materials on a variety of different supports and successfully applied them in water gas shift reactions. Tao Zhang et al. (Nature Chem., 2011, 3, 634.) reported the synthesis of Pt monoatomic materials on the surface of iron oxide, and successfully applied it to CO oxidation reaction. The turnover frequency of the reaction was increased by 2-3 times. However, the monoatomic material obtained by the solid surface dispersion method has many problems such as low metal loading and instability. Meanwhile, the noble metal single atoms on a solid support surface are strongly bonded and cannot be easily peeled off from the solid surface and thus cannot be used as a raw material for the production and preparation of a wider range of materials. The reduced noble metal atoms have a large degree of freedom of movement in solution, and easily aggregate to nanoparticles. Therefore, it is a great challenge in the field of material science and technology to obtain isolated noble metal atoms material by dispersing reduced metal atoms in a solution. High molecular weight polymers such as vinyl pyrrolidone polymer and isopropyl acrylamide polymer, etc. (J. Phys. Chem. B, 1999, 103, 3818.; Langmuir 1997, 13, 6465.) are widely used in the preparation of precious metal materials in solution. However, these high molecular polymers cannot prevent the noble metal atoms in the initial reduced state from aggregation and growth into nanoparticles, so a successful synthesis of the reduced isolated noble metal atoms in solution has not been reported so far.

Based on the above research status, how to overcome the shortcomings of low loading and instability of the isolated atomic material by solid surface dispersion, and eliminate the tendency of the initial reduced precious metal atoms in the solution, thus obtaining an effective method for preparing isolated noble metal atoms material is of great significance.

### SUMMARY OF THE INVENTION

An object of the present invention is to provide an isolated noble metal atoms material which is stable in solution.

The isolated noble metal atoms material stabilized in solution provided by the invention comprises of isolated noble metal atoms and protective agents.

The noble metal atom is a platinum group element or a post platinum group element; the platinum group elements consist of palladium, rhodium, ruthenium, osmium, iridium or platinum; and the post platinum group elements consists of silver or gold.

The noble metal atom is platinum atom; the ¹⁹⁵Pt NMR of the material is between -2600 and -2800 ppm.

The protective agent is a block copolymer containing siloxane groups and hydrophilic polymers.

The protective agent is a block copolymer containing siloxane groups and polyether groups.

The polysiloxane-polyglycol compound is preferred among the block copolymers containing siloxane groups and polyether groups.

The polysiloxane-polyethylene glycol block copolymer is preferred among the polysiloxane-polyglycol compounds, and its structural formula is as follows:

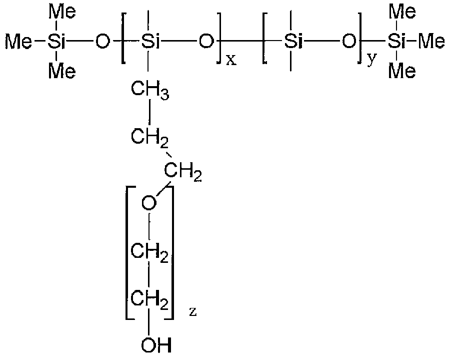

The mass ratio of the noble metal atoms to the protective agent is preferably 0.001%-50%.

A method for preparing isolated noble metal atoms in solution was carried out by following steps: a block copolymer containing siloxane groups and polyether groups, a noble metal compound precursor, a reducing agent, and water are mixed sufficiently; isolated noble metal atoms is obtained after the reaction at -30 - 200°C for 0.5 - 200 h, thereby obtaining isolated noble metal atoms containing solution;

The ratio of the amount of the reducing agent to the noble metal compound precursor varies from (1 to 10⁷):1.

The ratio of the amount of the reducing agent to water is from 1:10⁵ to 30:1.

The weight ratio of the noble metal compound precursor to the protective agent is arbitrary.

The noble metal compound precursor is one from chloroplatinic acid, sodium chloroplatinate, potassium chloroplatinate, platinum chloride, platinum chloride, platinum chloride, platinum nitrate, 1,5-cyclooctadiene platinum chloride, trichloro-(ethylene) potassium platinate, platinum tetraammine platinum, dinitrile phenyl dichloroplatinum, bis(triphenyl phosphite) platinum dichloride or ammonium tetrachloroplatinate.

The reducing agent is one from alcohol compounds, glucose, formic acid, citric acid, tartaric acid, ascorbic acid, hydrazine hydrate or borohydride.

The alcohol compound is one from or mixture of methanol, ethanol, propanol, isopropanol, n-butanol, isobutanol, butanol, tert-butanol, ethylene glycol or glycerol.

The invention achieves the preparation of reduced isolated noble metal atoms in solution. Compared with the conventional synthesis of the metal material in solution, the formation of the metal nanoparticles is avoided, and a reduced-state isolated atom solution in which the metal atoms are isolated is obtained. Compared with the solid atomic material supported on the solid surface, it has high load capacity and good stability.

### BRIEF DESCRIPTION OF THE DRAWINGS

Fig. 1. UV-visible spectra of Examples 1, 2, 3, 4, 5, and 6.
Fig. 2. 195 Pt NMR spectrum of Examples 1, 2, 3, 4, 5, and 6.

### DETAILED DESCRIPTION OF PREFERRED EMBODIMENTS

The present invention is further described in detail below by taking an isolated platinum atoms material which is stable in solution as an example. The protection of the patent is not limited to the specific embodiments.

### Example 1

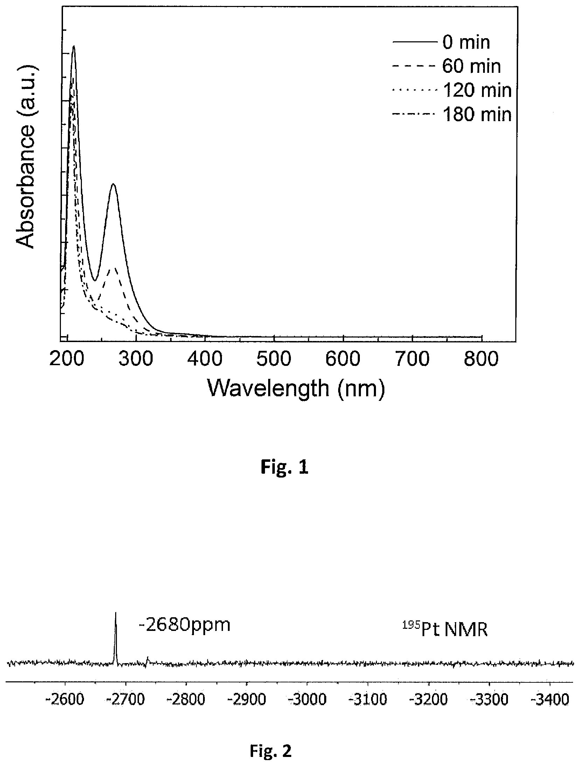

Preparation of isolated platinum atoms in solution: 0.6465 g polyethylene glycol-polysiloxane block copolymer, 135 ml ethanol, 10.2 ml water and 4.8 ml chloroplatinic acid solution with a concentration of 0.018404 mol/L are thoroughly mixed, and then the temperature is raised. The chloroplatinic acid was completely reduced under reflux condensation at 105°C for 3 hours. It was verified by UV-Vis and ¹⁹⁵Pt NMR that a isolated platinum atomic material was synthesized. The UV-Vis absorption spectrum (Fig. 1) shows that chloroplatinic acid is completely reduced. (Note: The UV absorption peak at 265 nm represents the absorption peak of PtCl₆²⁻ ion, and the disappearance of the UV absorption peak indicates that chloroplatinic acid is completely reduced.) ¹⁹⁵Pt NMR spectrum (Fig. 2) indicates: platinum atoms in the reduced state form. (Note: K₂PtCl₆ has a ¹⁹⁵Pt NMR at 0 ppm, PtCl₄²⁻ has a peak at -1617 ppm, and isolated Pt atoms have a ¹⁹⁵Pt NMR peak at -2680 ppm. At the same time, no Knight Shift of platinum nanoparticles is detected: -35000ppm to 10000ppm, which means that H₂PtCl₆ is completely reduced and isolated Pt atoms is formed, and no Pt nanoparticles are produced.)

### Example 2

Preparation of isolated platinum atoms in solution: 0.6465 g polyethylene glycol-polysiloxane block copolymer, 4.05 mg ethanol (the ratio of the amount of ethanol to chloroplatinic acid is 1:1), 145 ml water and 4.8 ml chloroplatinic acid solution with a concentration of 0.018404 mol/L are thoroughly mixed (the ratio of the amount of ethanol to water was 1:10⁵), and the temperature was raised. The mixture is refluxed and condensed at 105°C for 3 hours to completely reduce chloroplatinic acid. It was verified by UV-Vis and ¹⁹⁵Pt NMR that a isolated platinum atomic material was synthesized. The UV-visible spectrum is shown in Fig. 1, and the ¹⁹⁵Pt NMR spectrum is shown in Fig. 2.

### Example 3

Preparation of isolated platinum atoms in solution: 0.6465 g polyethylene glycol-polysiloxane block copolymer, 148.5 ml ethanol, 1.02 ml water and 0.48 ml chloroplatinic acid solution with a concentration of 0.018404 mol/L are thoroughly mixed (the ratio of the amount of ethanol to water is 30:1), and the temperature was raised. The mixture was condensed and refluxed at 105°C for 3 hours to completely reduce chloroplatinic acid. It was verified by UV-Vis and ¹⁹⁵Pt NMR that a isolated platinum atomic material was synthesized. The UV-visible spectrum is shown in Fig. 1, and the ¹⁹⁵Pt NMR spectrum is shown in Fig. 2.

### Example 4

Preparation of isolated platinum atoms in solution: 0.6465 g polyethylene glycol-polysiloxane block copolymer, 882 g ethanol (1.14 L, ethanol addtion amount is 10⁷ times of that of chloroplatinic acid), 100.2 ml water and 4.8 ml chloroplatinic acid solution with a concentration of 0.018404 mol/L are thoroughly mixed, and the temperature was raised. The mixture was condensed and refluxed at 105°C for 3 hours to completely reduce chloroplatinic acid. It was verified by UV-Vis and ¹⁹⁵Pt NMR that a isolated platinum atomic material was synthesized. The UV-visible spectrum is shown in Fig. 1, and the ¹⁹⁵Pt NMR spectrum is shown in Fig. 2.

### Example 5

Preparation of isolated platinum atoms in solution: 1719.92g polyethylene glycol-polysiloxane block copolymer, 1000ml ethanol, 100ml water and 4.8ml chloroplatinic acid solution with a concentration of 0.018404 mol/L are thoroughly mixed. (the weight ratio of isolated Pt atoms to protective agent is 0.001%). The mixture was condensed and refluxed at 105°C for 3 hours to completely reduce chloroplatinic acid. It was verified by UV-Vis and ¹⁹⁵Pt NMR that a isolated platinum atomic material was synthesized. The UV-visible spectrum is shown in Fig. 1, and the ¹⁹⁵Pt NMR spectrum is shown in Fig. 2.

### Example 6

Preparation of isolated platinum atoms in solution: 0.0344g polyethylene glycol-polysiloxane block copolymer, 135ml ethanol, 10.2ml water and 4.8ml chloroplatinic acid solution with a concentration of 0.018404 mol/L are thoroughly mixed (the weight ratio of isolated Pt atoms to protective agent is 50%). The mixture was condensed and refluxed at 105°C for 3 hours to completely reduce chloroplatinic acid. It was verified by UV-Vis and ¹⁹⁵Pt NMR that a isolated platinum atomic material was synthesized. The UV-visible spectrum is shown in Fig. 1, and the ¹⁹⁵Pt NMR spectrum is shown in Fig. 2.

## Claims

1. A material comprising solution-stable noble metal atoms, **characterized in that** it comprises isolated noble metal atoms and a protective agent.

2. The material of claim 1, **characterized in that** the isolated noble metal atoms are platinum group elements or post platinum group elements; the platinum group elements contain palladium, rhodium, ruthenium, iridium, ruthenium or platinum; the post platinum group elements contain silver or gold.

3. The material of claim 1, **characterized in that** the isolated noble metal atoms are platinum atoms; and ¹⁹⁵Pt NMR of the material is between -2600 and -2800 ppm.

4. The material of claim 1, **characterized in that** the protective agent is a block copolymer containing siloxane groups and hydrophilic polymers.

5. The material of claim 1, **characterized in that** the protective agent is a block copolymer containing siloxane groups and polyether groups.

6. The material of claim 5, **characterized in that** the block copolymer containing siloxane groups and polyether groups is preferably a polysiloxane-polyglycol copolymer.

7. The material of claim 6, **characterized in that** the polysiloxane-polyglycol copolymer is preferably polysiloxane-polyethylene glycol copolymer having a structural formula as follows

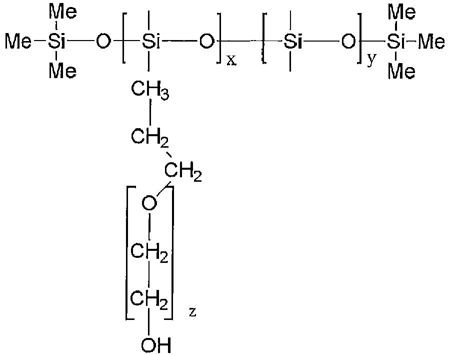

8. The material of claim 1, **characterized in that** the weight ratio of the isolated noble metal atoms to the protective agent is arbitrary.

9. A method for preparing a material comprising isolated noble metal atoms in a solution, **characterized in that** the following steps are carried out: a block copolymer containing siloxane groups and polyether groups, a noble metal compound precursor, a reducing agent, and water are mixed sufficiently; isolated noble metal atoms are obtained after a reaction at -30 - 200°C for 0.5 - 200 hours, thereby obtaining the isolated noble metal atoms in the solution;
the molar ratio of the amount of the reducing agent to the noble metal compound precursor is from (1- 10⁷):1; and
the ratio of the amount of the reducing agent to water is from 1:10⁵ to 30:1.

10. The method of claim 9, **characterized in that** the noble metal precursor is one from chloroplatinic acid, sodium chloroplatinate, potassium chloroplatinate, and platinum chloride. Platinum chloride, diethylamine platinum chloride, platinum nitrate, 1,5-cyclooctadiene platinum dichloride, trichloro-(ethylene) potassium platinate, platinum tetraammine platinum, dinitrile phenyl one of platinum chloride, bis(triphenyl phosphite) platinum dichloride or ammonium tetrachloroplatinate.

11. The method of claim 9 wherein the reducing agent is one from alcohol compounds, glucose, formic acid, citric acid, tartaric acid, ascorbic acid, hydrazine hydrate or borohydride.

12. The method of claim 11 wherein the alcohol compounds are one or a mixture of methanol, ethanol, propanol, isopropanol, n-butanol, isobutanol, butanol, tert-butanol, ethylene glycol, and glycerol.
